# EUROPÄISCHE PATENTANMELDUNG

(11) **EP 4 847 226 A2**
(43) Veröffentlichungstag der Anmeldung: **02.12.2026**
(21) Anmeldenummer: 26179993.6
(22) Anmeldetag: 20.05.2026
(51) Int. Cl.: B29C 43/14, B29C 43/52, B29K 105/12

(54) **VERFAHREN ZUR HERSTELLUNG EINES BAUTEILS AUS EINEM THERMOPLASTISCHEN WERKSTOFF**

(30) Priorität: 27.05.2025 DE 102025120623
(71) Anmelder: Polytec Composites NL B.V., 4704 RG Roosendaal (NL)
(72) Erfinder: Van Gilst, Walter, 4704 Rosendaal (NL); Tunders, Patrick, 4704 Rosendaal (NL)
(74) Vertreter: dompatent

(57) **Zusammenfassung**

Die vorliegende Anmeldung betrifft ein Verfahren zur Herstellung eines Bauteils aus einem thermoplastischen Werkstoff aufweisend die Schritte:

a) Bereitstellen und Erhitzen einer Bauteilrohform ( **10**) auf eine definierte erste Verarbeitungstemperatur (T **1**), wobei die Bauteilrohform ( **10**) zumindest anteilig aus einem thermoplastischen Werkstoff ausgebildet ist;

b) Einbringen der auf die erste Verarbeitungstemperatur (T **1**) erhitzten Bauteilrohform ( **10**) in eine Formpresse ( **2**) mit einer formgebenden Werkzeugform, wobei die formgebende Werkzeugform einen Anpressblock ( **21**) und eine gegenüberliegende Formkavität ( **22**) umfasst;

c) Formgebendes Umformen der erhitzten Bauteilrohform ( **10**) in der formgebenden Werkzeugform der Formpresse durch Aufbringen eines ersten Pressdrucks (P **1**) zum Erhalt einer Bauteilzwischenform ( **11**);

d) Abkühlen der Bauteilzwischenform ( **11**) in der Formpresse ( **2**) im geschlossenen Zustand der Werkzeugform auf eine zweite Handhabungstemperatur (T **2**);

e) Öffnen der Werkzeugform der Formpresse ( **2**) und Überführen der auf die zweite Handhabungstemperatur (T **2**) heruntergekühlten geformten Bauteilzwischenform ( **11**) in eine Stanzpresse ( **3**), wobei die Stanzpresse ( **3**) ein Oberwerkzeug ( **34**) und eine gegenüberliegende Werkzeugkavität ( **32**) umfasst, wobei das Oberwerkzeug ( **34**) mindestens ein Stanz- und/oder Schneidelement ( **33**) sowie einen Anpressblock ( **31**) aufweist;

f) Stanzpressen der geformten Bauteilzwischenform ( **11**) in der Stanzpresse ( **3**) durch Aufbringen eines zweiten Pressdrucks (P **2**) zum Erhalt einer geformten und gestanzten Bauteilendform ( **12**);

g) Abkühlen der Bauteilendform ( **12**) in der geschlossenen Stanzpresse ( **3**) auf eine dritte Temperatur (T **3**); und

h) Öffnen der Stanzpresse ( **3**) und Entfernen der auf die dritte Temperatur (T **3**) abgekühlten Bauteilendform ( **12**) aus der Stanzpresse.

## Beschreibung

Die vorliegende Erfindung betrifft ein Verfahren zur Herstellung eines Bauteils aus einem thermoplastischen Werkstoff.

Aus dem Stand der Technik sind bereits Verfahren zur Herstellung von Bauteilen aus thermoplastischen Kunststoffen bzw. thermoplastischen Werkstoffen bekannt geworden. So wird beispielsweise bei dem Herstellungsverfahren des sogenannten "Compression Moldings" gemäß Stand der Technik zunächst eine Pressmasse zumindest anteilig gebildet aus einem thermoplastischen Werkstoff, welcher beispielsweise als Bauteilrohform bezeichnet werden kann, auf eine erste Temperatur oberhalb der Erweichungstemperatur bei amorphen thermoplastischen Werkstoffen oder oberhalb der Schmelztemperatur bei teilkristallinen thermoplastischen Werkstoffen erhitzt. In einem ersten Fertigungsschritt wird in einer Formpresse die Bauteilrohform bzw. die Pressmasse durch Zufahren einer Werkzeugkavität der Formpresse und durch Aufbringen einer Schließkraft die Bauteilrohform umgeformt zum Erhalt einer Bauteilzwischenform. Nach dem Umformen der Pressmasse zum Erhalt der Bauteilzwischenform muss die Bauteilzwischenform nach dem erfolgten Pressformvorgang noch eine definierte Kühlzeit in der geschlossenen Werkzeugkavität der Formpresse verbleiben, bis eine Formfestigkeit erreicht wurde und die abgekühlte Bauteilzwischenform aus der Formpresse entnommen werden kann. In einem zweiten parallel verlaufenden Stanzpressverfahren wird die Bauteilzwischenform gestanzt, um entsprechend eine gestanzte Bauteilendform zu erhalten. Der Stanzvorgang innerhalb der Stanzpresse dauert gemäß Stand der Technik nur einen Bruchteil der erforderlichen Abkühlungszeit in der Formpresse, beispielsweise kann bei dickwandigen Bauteilen die Kühlzeit, welche die Bauteilzwischenform nach dem erfolgten Pressvorgang in der Formpresse bzw. genauer in der Formkavität der Formpresse verbleiben muss, 30 bis 60 Sekunden betragen. In dieser Abkühlzeit wird die Formpresse nicht effizient genutzt, da die Schließkraft der Formpresse nur maximal während der Hälfte der Kühlzeit erforderlich ist. Weiterhin wird die vorliegende Stanzpresse ebenfalls nicht effizient ausgenutzt, da der Stanzvorgang lediglich 5 bis 10 Sekunden. zum Stanzen der Bauteilzwischenform und Erhalten der Bauteilendform benötigt. Die vorliegende Erfindung stellt sich die Aufgabe, die bekannten Herstellungsverfahren aus dem Stand der Technik zu verbessern, um insbesondere die Formpresse und die Stanzpresse effizienter zu nutzen.

Erfindungsgemäß gelöst wird die Aufgabe durch ein Verfahren zur Herstellung eines Bauteils aus einem thermoplastischen Werkstoff aufweisend die Schritte:
a) Bereitstellen und Erhitzen einer Bauteilrohform auf eine definierte erste Verarbeitungstemperatur, wobei die Bauteilrohform zumindest anteilig aus einem thermoplastischen Werkstoff ausgebildet ist;
b) Einbringen der auf die erste Verarbeitungstemperatur erhitzten Bauteilrohform in eine Formpresse mit einer formgebenden Werkzeugform, wobei die formgebende Werkzeugform einen Anpressblock und eine gegenüberliegende Formkavität umfasst;
c) Formgebendes Umformen der erhitzten Bauteilrohform in der formgebenden Werkzeugform der Formpresse durch Aufbringen eines ersten Pressdrucks zum Erhalt einer Bauteilzwischenform;
d) Abkühlen der Bauteilzwischenform in der Formpresse im geschlossenen Zustand der Werkzeugform auf eine zweite Handhabungstemperatur;
e) Öffnen der Werkzeugform der Formpresse und Überführen der auf die zweite Handhabungstemperatur heruntergekühlten geformten Bauteilzwischenform in eine Stanzpresse, wobei die Stanzpresse ein Oberwerkzeug und eine gegenüberliegende Werkzeugkavität umfasst, wobei das Oberwerkzeug mindestens ein Stanz- und/oder Schneidelement sowie einen Anpressblock aufweist;
f) Stanzpressen der geformten Bauteilzwischenform in der Stanzpresse durch Aufbringen eines zweiten Pressdrucks zum Erhalt einer geformten und gestanzten Bauteilendform;
g) Abkühlen der Bauteilendform in der geschlossenen Stanzpresse auf eine dritte Temperatur; und
h) Öffnen der Stanzpresse und Entfernen der auf die dritte Temperatur abgekühlten Bauteilendform aus der Stanzpresse.

Erfindungsgemäß können als thermoplastische Werkstoffe im Rahmen der vorliegenden Erfindung bevorzugt folgende thermoplastische Kunststoffe Verwendung finden: Polypropylen (PP), Polyamid (PA), Polyethylen (PE), Polybutylenterephthalat (PBT), Polycarbonat (PC), Polyetheretherketon (PEEK).

Das erfindungsgemäße Verfahren weist gegenüber dem aus dem Stand der Technik bekannten Verfahren den Vorteil auf, dass nach dem Verfahrensschritt c) des formgebenden Umformens zum Erhalt der Bauteilzwischenform in der Werkzeugform der Formpresse ein Abkühlen der Bauteilzwischenform in der Formpresse im geschlossenen Zustand der Werkzeugform lediglich auf eine zweite Handhabungstemperatur erfolgt, wobei die zweite Handhabungstemperatur derart gewählt ist, dass lediglich die äußere Schicht bzw. die Außenhaut der Bauteilzwischenform erstarrt bzw. im kristallisierten Zustand vorliegt, derart, dass die Bauteilzwischenform gerade handhabbar ist.

Im Kern der Bauteilzwischenform kann das thermoplastische Kunststoffmaterial erfindungsgemäß während des Verfahrensschritts e) und f) noch eine Temperatur oberhalb der Schmelztemperatur aufweisen. Gegenüber dem Stand der Technik erfolgt das Abkühlen im Verfahrensschritt d) dementsprechend in einer deutlich kürzeren Zeitdauer, als dies gemäß Stand der Technik üblich ist.

Wenn die entsprechende Bauteilzwischenform, welche lediglich auf die zweite Handhabungstemperatur innerhalb der geschlossenen Werkzeugform der Formpresse abgekühlt wurde, nicht weiter erfindungsgemässen weiteren Schritten unterzogen wurde, würde dies dazu führen, dass nach dem Formpressen, wenn kein Druck mehr auf die Bauteilzwischenform ausgeübt würde, das noch beispielsweise oberhalb der Schmelztemperatur vorliegende thermoplastische Material im Bauteilkern Blasen werfen würde, wodurch sich dann die Bauteilzwischenform ungewünscht verformen bzw. Blasen werfen würde. Um dies zu verhindern, wird die Bauteilzwischenform, welche auf die zweite Handhabungstemperatur heruntergekühlt wurde, unmittelbar in eine Stanzpresse überführt und im Verfahrensschritt e) und darauffolgend in den Verfahrensschritten f) und g) in der Stanzpresse durch Aufbringen eines zweiten Stanzpressdrucks gestanzt und kühlt daraufhin innerhalb der geschlossenen Formpresse bzw. genauer innerhalb der geschlossenen Werkzeugform der Formpresse auf eine dritte Temperatur herunter, wobei dann der gesamte thermoplastische Körper auf eine dritte Temperatur gleich oder kleiner der Glasübergangstemperatur für amorphe thermoplastische Kunststoffe oder gleich oder kleiner der Kristallisationstemperatur für teilkristalline thermoplastische Kunststoffe beträgt.

Es kann vorgesehen werden, dass die Bauteilform zumindest anteilig aus einem amorphen thermoplastischen Werkstoff ausgebildet ist und die erste Verarbeitungstemperatur in den Verfahrensschritten a) und b) oberhalb der Erweichungstemperatur des amorphen thermoplastischen Werkstoffs gewählt wird oder wobei die Werkstoffrohform zumindest anteilig aus einem teilkristallinen thermoplastischen Werkstoff ausgebildet ist und die erste Verarbeitungstemperatur in den Verfahrensschritten a) und b) oberhalb der Schmelztemperatur des teilkristallinen thermoplastischen Werkstoffs gewählt ist.

In den Verfahrensschritten a) und b) muss dabei sichergestellt werden, dass die erste Verarbeitungstemperatur, welche oberhalb der Erweichungstemperatur bzw. oberhalb der Schmelztemperatur gewählt ist, in der gesamten Bauteilrohform und damit im gesamten thermoplastischen Werkstoff vorliegt und nicht lediglich in einem Oberflächenbereich bzw. im Bereich einer Außenhaut der Bauteilrohform vorliegt. Je Bauteilrohform muss somit möglichst homogen insgesamt auf die vorbezeichnete erste Temperatur erhitzt bzw. vorgewärmt werden.

Die Bestimmung der Erweichungstemperatur (Vicat) erfolgt gemäß DIN EN ISO 306, Ausgabe 2013. Die Bestimmung der Schmelztemperatur und Kristallisationstemperatur erfolgt gemäß DIN EN ISO 11357-3, Ausgabe 2018-07. Die Glasübergangstemperatur wird dabei gemäß DIN EN ISO 11357-2, Ausgabe 2020-08 bestimmt.

Es kann vorgesehen werden, dass die zweite Handhabungstemperatur im Bereich unterhalb der Erweichungstemperatur und oberhalb der Glasübergangstemperatur bzw. oberhalb der Kristallisationstemperatur des thermoplastischen Werkstoffs gewählt wird. Anders als in den Verfahrensschritten a) und b), wobei sichergestellt wird, dass die erste Verarbeitungstemperatur innerhalb der gesamten Bauteilrohform vorliegt und möglichst homogen vorliegt, wird in Verfahrensschritt d), wobei die Bauteilzwischenform auf die zweite Handhabungstemperatur abgekühlt wird, die zweite Handhabungstemperatur lediglich im Bereich der Außenhaut bzw. einer äußeren Schicht der Bauteilzwischenform sichergestellt bzw. bezogen auf diesen Bereich ermittelt. Dabei kann beispielsweise im Kern der Bauteilzwischenform das thermoplastische Kunststoffmaterial noch auf einer Temperatur oberhalb der Schmelztemperatur vorliegen. Wichtig ist diesbezüglich lediglich, dass die äußere Schicht der Bauteilzwischenform auf die zweite Handhabungstemperatur heruntergekühlt wurde, nämlich dass diesbezüglich eine handhabbare thermoplastische Bauteilzwischenform vorliegt.

Es kann weiterhin vorgesehen werden, dass die dritte Temperatur im Verfahrensschritt g) gleich oder kleiner der Glasübergangstemperatur für amorphe thermoplastische Kunststoffe oder gleich oder kleiner der Kristallisationstemperatur für teilkristalline thermoplastische Kunststoffe gewählt ist. Dabei wird im Verfahrensschritt g) wieder sichergestellt, dass im gesamten Bereich der Bauteilendform die vorbezeichnete Temperatur erreicht wurde, um spätere Verformungen bzw. Aufwerfungen in der Bauteilendform sicher zu verhindern.

Erfindungsgemäß kann es vorgesehen werden, dass die Temperaturen während der Verfahrensschritte so gewählt sind, dass gilt:
- erste Temperatur > zweite Handhabungstemperatur > dritte Temperatur.

Weiterhin kann es vorgesehen werden, dass die Pressdrücke während der Verfahrensschritte so gewählt werden, dass gilt:
- erster Pressdruck > zweiter Pressdruck.

Erfindungsgemäß ist es wesentlich, dass der erste Pressdruck beispielsweise ein Druck von 100 bis 200 bar zur Umformung der erhitzten Bauteilrohform in der formgebenden Werkzeugform der Formpresse lediglich während einer ersten geringen Zeitdauer des Umformens der Bauteilrohform in die Bauteilzwischenform anliegt. Nachfolgend kann während des Vorgangs des Abkühlens im Verfahrensschritt d) der vorbezeichnete erste Pressdruck deutlich reduziert werden, beispielsweise auf einen Druck, der die Hälfte bzw. teilweise weniger als die Hälfte des ersten Pressdrucks beträgt.

Im Verfahrensschritt f) kann als zweiter Pressdruck ein wiederum deutlich geringerer Druck als der erste Pressdruck gewählt werden. Dabei können beispielsweise Drücke benutzt werden, die das 0,1-fache des ersten Pressdrucks bzw. teilweise geringer betragen.

Weiterhin kann es vorgesehen werden, dass der Anpressblock der Stanzpresse vorlaufend zu dem mindestens einen Stanz- und/oder Schneidwerkzeug der Stanzpresse ausgebildet ist, wobei im Verfahrensschritt f) zunächst durch den Anpressblock des Oberwerkzeugs eine definierte Anpresskraft auf die Bauteilzwischenform aufgebracht wird und darauffolgend das mindestens eine Stanz- und/oder Schneidwerkzeug die Bauteilzwischenform stanzt zum Erhalt der Bauteilendform, wobei die vorbezeichnete definierte Anpresskraft des Anpressblocks des Oberwerkzeugs entlang des Abkühlens der Bauteilendform im Verfahrensschritt g) aufrechterhalten werden kann.

Alternativ kann es vorgesehen werden, dass das mindestens eine Stanz- und/oder Schneidwerkzeug der Stanzpresse vorlaufend zu dem Anpressblock ausgebildet ist, wobei im Verfahrensschritt f) zunächst das mindestens eine Stanz- und/oder Schneidwerkzeug die Bauteilzwischenform stanzt zum Erhalt der Bauteilendform und darauffolgend durch den Anpressblock des Oberwerkzeugs eine definierte Anpresskraft auf die Bauteilendform aufgebracht wird, welche auch im Verfahrensschritt g) erhalten bleibt.

Erfindungsgemäß kann es vorgesehen werden, dass der Anpressblock und/oder die Werkzeugkavität der Formpresse temperiert werden, bevorzugt durch Ausbildung von Fluidkanälen in dem Anpressblock und/oder der Werkzeugkavität und Durchströmung mit einem Temperierungsmittel. Dabei kann es erfindungsgemäß vorgesehen werden, dass in sämtlichen Verfahrensschritten, insbesondere während der Verfahrensschritte a) bis h), kontinuierlich eine Durchströmung und eine aktive Kühlung der vorbezeichneten Elemente mittels eines Temperierungsmittels erfolgt.

Weiterhin kann es vorgesehen werden, dass der Anpressblock und/oder die Formkavität der Stanzpresse temperiert werden, bevorzugt durch Ausbildung von Fluidkanälen in dem Anpressblock und/oder der Formkavität und Durchströmung mit einem Temperierungsmittel. Es kann vorgesehen werden, dass als Temperierungsmittel beispielsweise Kühlwasser, Öl oder Stickstoff erfindungsgemäß benutzt wird.

Weiterhin kann vorgesehen werden, dass der Anpressblock der Formpresse und/oder der Stanzpresse zumindest anteilig aus Stahl, Kupfer oder Aluminium ausgebildet ist.

Es kann vorgesehen werden, dass die Formkavität der Stanzpresse und/oder die Werkzeugkavität der Formpresse zumindest anteilig aus Stahl, Kupfer oder Aluminium ausgebildet ist.

Als Bauteilrohform kann erfindungsgemäß zumindest ein Element aus der Gruppe ausgewählt von: Direkt-Langfaserverstärkten Thermoplaste (D-LFT), Glasfaser-Mattenverstärkte Thermoplaste (GMT), einem plattenförmigen faserverstärkten thermoplastischen Verbundhalbzeug, einem undirektional faserverstärkten Thermoplastischen Tape als thermoplastischer Werkstoff genutzt werden.

Weiterhin kann es vorgesehen werden, dass die Bauteilrohform zumindest anteilig aus einem thermoplastischen Kunststoff ausgebildet ist, in welchem mindestens ein metallisches Element eingebettet vorliegt.

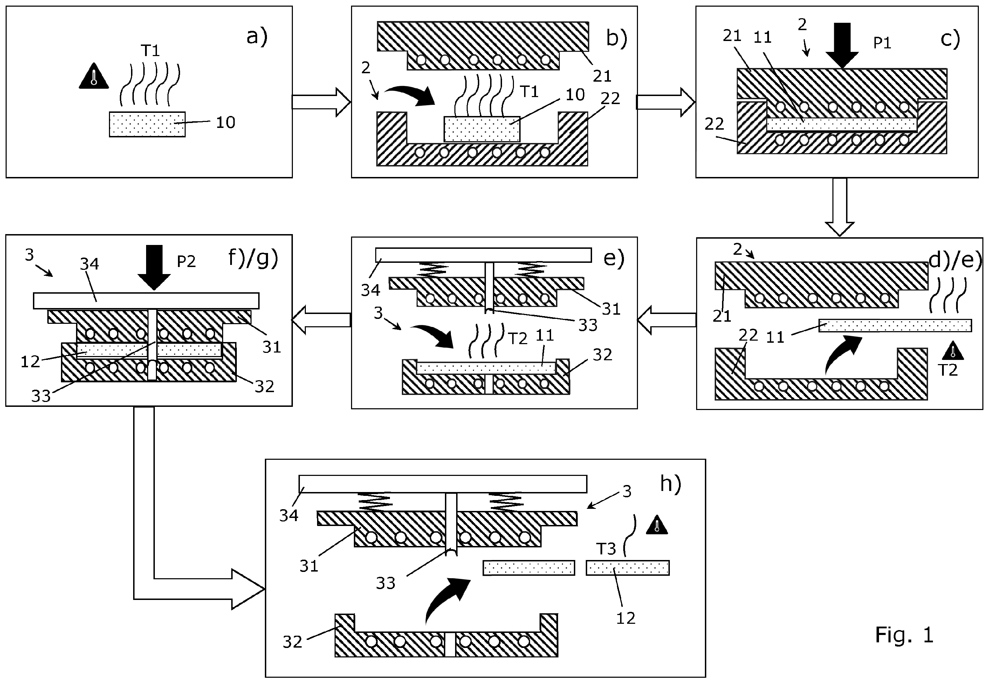

In der Figur 1 ist das erfindungsgemäß Herstellungsverfahren nochmals schematisch dargestellt.

Im Verfahrensschritt a) erfolgt das Bereitstellen und Erhitzen einer Bauteilrohform 10 auf eine definierte erste Verarbeitungstemperatur T1, wobei die Bauteilrohform 10 zumindest anteilig aus einem thermoplastischen Werkstoff ausgebildet ist. Im darauffolgenden Verfahrensschritt b) erfolgt das Einbringen der auf die erste Verarbeitungstemperatur T1 erhitzten Bauteilrohform 10 in eine Formpresse 2 mit einer formgebenden Werkzeugform, wobei die formgebende Werkzeugform einen Anpressblock 21 und eine gegenüberliegende Formkavität 22 umfasst. Hiernach erfolgt im Schritt c) das formgebende Umformen der erhitzten Bauteilrohform 10 in der formgebenden Werkzeugform der Formpresse 2 durch Aufbringen eines ersten Pressdrucks P1 zum Erhalt einer Bauteilzwischenform 11. Anschließend erfolgt im Verfahrensschritt d) das Abkühlen der Bauteilzwischenform 11 in der Formpresse 2 im geschlossenen Zustand der Werkzeugform auf eine zweite Handhabungstemperatur T2; woraufhin im Verfahrensschritt e) das Öffnen der Werkzeugform der Formpresse 2 und das Überführen der auf die zweite Handhabungstemperatur T2 heruntergekühlten geformten Bauteilzwischenform 11 in eine Stanzpresse 3 erfolgt, wobei die Stanzpresse 3 ein Oberwerkzeug 34 und eine gegenüberliegende Werkzeugkavität 32 umfasst, wobei das Oberwerkzeug 34 mindestens ein Stanz- und/oder Schneidelement 33 sowie einen Anpressblock 31 aufweist. Anschließend wird im Verfahrensschritt f) die geformte Bauteilzwischenform 11 in der Stanzpresse 3 bearbeitet durch Aufbringen eines zweiten Pressdrucks P2 zum Erhalt einer geformten und gestanzten Bauteilendform 12. Anschließend erfolgt im Schritt g) das Abkühlen der Bauteilendform 12 in der geschlossenen Stanzpresse 3 auf eine dritte Temperatur T3; und im Schritt h) das Öffnen der Stanzpresse 3 und Entfernen der auf die dritte Temperatur T3 abgekühlten Bauteilendform 12 aus der Stanzpresse 3.

## Patentansprüche

1. Verfahren zur Herstellung eines Bauteils aus einem thermoplastischen Werkstoff aufweisend die Schritte:
a) Bereitstellen und Erhitzen einer Bauteilrohform (10) auf eine definierte erste Verarbeitungstemperatur (T1), wobei die Bauteilrohform (10) zumindest anteilig aus einem thermoplastischen Werkstoff ausgebildet ist;
b) Einbringen der auf die erste Verarbeitungstemperatur (T1) erhitzten Bauteilrohform (10) in eine Formpresse (2) mit einer formgebenden Werkzeugform, wobei die formgebende Werkzeugform einen Anpressblock (21) und eine gegenüberliegende Formkavität (22) umfasst;
c) Formgebendes Umformen der erhitzten Bauteilrohform (10) in der formgebenden Werkzeugform der Formpresse durch Aufbringen eines ersten Pressdrucks (P1) zum Erhalt einer Bauteilzwischenform (11);
d) Abkühlen der Bauteilzwischenform (11) in der Formpresse (2) im geschlossenen Zustand der Werkzeugform auf eine zweite Handhabungstemperatur (T2);
e) Öffnen der Werkzeugform der Formpresse (2) und Überführen der auf die zweite Handhabungstemperatur (T2) heruntergekühlten geformten Bauteilzwischenform (11) in eine Stanzpresse (3), wobei die Stanzpresse (3) ein Oberwerkzeug (34) und eine gegenüberliegende Werkzeugkavität (32) umfasst, wobei das Oberwerkzeug (34) mindestens ein Stanz- und/oder Schneidelement (33) sowie einen Anpressblock (31) aufweist;
f) Stanzpressen der geformten Bauteilzwischenform (11) in der Stanzpresse (3) durch Aufbringen eines zweiten Pressdrucks (P2) zum Erhalt einer geformten und gestanzten Bauteilendform (12);
g) Abkühlen der Bauteilendform (12) in der geschlossenen Stanzpresse (3) auf eine dritte Temperatur (T3); und
h) Öffnen der Stanzpresse (3) und Entfernen der auf die dritte Temperatur (T3) abgekühlten Bauteilendform (12) aus der Stanzpresse.

2. Verfahren nach Anspruch 1, wobei die Bauteilrohform (10) zumindest anteilig aus einem amorphen thermoplastischen Werkstoff ausgebildet ist und die erste Verarbeitungstemperatur (T1) in den Verfahrensschritten a) und b) oberhalb der Erweichungstemperatur des amorphen thermoplastischen Werkstoffes gewählt wird oder wobei die Bauteilrohform (10) zumindest anteilig aus einem teilkristallinen thermoplastischen Werkstoff ausgebildet ist und die erste Verarbeitungstemperatur (T1) in den Verfahrensschritten a) und b) oberhalb der Schmelztemperatur des teilkristallinen thermoplastischen Werkstoffes gewählt wird.

3. Verfahren nach Anspruch 1 oder 2, wobei die zweite Handhabungstemperatur (T2) im Bereich unterhalb der Erweichungstemperatur und oberhalb der Glasübergangstemperatur bzw. oberhalb der Kristallisationstemperatur des thermoplastischen Werkstoffes gewählt wird.

4. Verfahren nach einem der Ansprüche 1 bis 3, wobei die dritte Temperatur (T3) im Verfahrensschritt g) gleich oder kleiner der Glasübergangstemperatur für amorphe thermoplastische Werkstoffe oder gleich oder kleiner der Kristallisationstemperatur für teilkristalline thermoplastische Kunststoffe gewählt wird.

5. Verfahren nach einem der Ansprüche 1 bis 4, wobei die Temperaturen während der Verfahrensschritte so gewählt sind, dass gilt: erste Temperatur (T1) > zweite Handhabungstemperatur (T2) > dritte Temperatur (T3).

6. Verfahren nach einem der vorausgehenden Ansprüche, wobei die Pressdrücke während der Verfahrensschritte so gewählt werden, dass gilt: erster Pressdruck (P1) > zweiter Pressdruck (P2).

7. Verfahren nach einem der vorausgehenden Ansprüche, wobei der Anpressblock (31) vorlaufend zu dem mindestens einen Stanz- und/oder Schneidwerkzeug (33) ausgebildet ist, wobei im Verfahrensschritt f) zunächst durch den Anpressblock (31) des Oberwerkzeugs (34) eine definierte Anpresskraft (P2) auf die Bauteilzwischenform (11) aufgebracht wird und darauffolgend das mindestens eine Stanz- und/oder Schneidwerkzeug (33) die Bauteilzwischenform (11) stanzt zum Erhalt der Bauteilendform (12).

8. Verfahren nach einem der Ansprüche 1 bis 6, wobei das mindestens eine Stanz- und/oder Schneidwerkzeug (33) vorlaufend zu dem Anpressblock (31) ausgebildet ist, wobei im Verfahrensschritt f) zunächst das mindestens eine Stanz- und/oder Schneidwerkzeug (33) die Bauteilzwischenform stanzt zum Erhalt der Bauteilendform (12) und darauffolgend durch den Anpressblock (31) des Oberwerkzeugs (34) eine definierte Anpresskraft auf die Bauteilendform (12) aufgebracht wird.

9. Verfahren nach einem der vorausgehenden Ansprüche, wobei der Anpressblock (31) des Oberwerkzeugs (34) der Stanzpresse (3) federnd gelagert ist gegenüber dem mindestens einen Stanz- und/oder Schneidwerkzeug (33) des Oberwerkzeugs (34) der Stanzpresse (3).

10. Verfahren nach einem der vorausgehenden Ansprüche, wobei der Anpressblock (21) und/oder die Werkzeugkavität (22) der Formpresse (2) temperiert werden, bevorzugt durch Ausbildung von Fluidkanälen in dem Anpressblock (21) und/oder der Werkzeugkavität (22) und Durchströmung mit einem Temperierungsmittel.

11. Verfahren nach einem der vorausgehenden Ansprüche, wobei der Anpressblock (31) und/oder die Formkavität (32) der Stanzpresse (3) temperiert werden, bevorzugt durch Ausbildung von Fluidkanälen in dem Anpressblock (31) und/oder der Formkavität (33) und Durchströmung mit einem Temperierungsmittel.

12. Verfahren nach Anspruch 10 oder 11, wobei das Temperierungsmittel ausgewählt ist als ein Element aus der Gruppe von: Kühlwasser, Öl, Stickstoff.

13. Verfahren nach einem der vorausgehenden Ansprüche, wobei der Anpressblock (21, 31) der Formpresse (2) und/oder der Stanzpresse (3) zumindest anteilig aus Stahl, Kupfer oder Aluminium ausgebildet ist.

14. Verfahren nach einem der vorausgehenden Ansprüche, wobei die Formkavität (32) der Stanzpresse (3) und/oder die Werkzeugkavität (22) der Formpresse (2) zumindest anteilig aus Stahl, Kupfer oder Aluminium ausgebildet ist.

15. Verfahren nach einem der vorausgehenden Ansprüche, wobei die Bauteilrohform zumindest ein Element aus der Gruppe ausgewählt von: Direkt-Langfaserverstärkten-Thermoplasten (D-LFT), Glasfaser-Mattenverstärkte-Thermoplaste (GMT), einem plattenförmigen faserverstärktem thermoplastischen Verbundhalbzeug, einem unidirektional faserverstärkten thermoplastischen Tape umfasst.

16. Verfahren nach einem der vorausgehenden Ansprüche, wobei die Bauteilrohform zumindest anteilig aus einem thermoplastischen Kunststoff ausgebildet ist, in welchen mindestens ein metallisches Element eingebettet ist.
